# EUROPEAN PATENT APPLICATION

(11) **EP 4 845 199 A1**
(43) Date of publication of application: **25.11.2026**
(21) Application number: 25742146.1
(22) Date of filing: 15.01.2025
(51) Int. Cl.: H04W 24/02, H04W 24/08, H04W 24/10, H04W 64/00, H04B 7/185, H04W 84/04, B64U 101/20

(54) **METHOD BY WHICH USER EQUIPMENT PERFORMS COMMUNICATION IN WIRELESS COMMUNICATION SYSTEM AND APPARATUS THEREFOR**

(30) Priority: 15.01.2024 KR 20240006076
(71) Applicant: LG Electronics Inc., Yeongdeungpo-gu Seoul 07336 (KR)
(72) Inventor: BACK, Seoyoung, Seoul 06772 (KR); LEE, Seungmin, Seoul 06772 (KR); PARK, Giwon, Seoul 06772 (KR)
(74) Representative: Mooser, Sebastian Thomas
(86) International application number: PCT/KR2025/000897
(87) International publication number: WO 2025/155093

(57) **Abstract**

Disclosed are a method performed by a user equipment (UE), according to various embodiments, and an apparatus therefor. Disclosed are a method and an apparatus therefor, the method comprising the steps of: measuring interference in a connection between a UE and a base station; and reporting, to the base station, interference information including the interference strength of the measured interference.

## Description

### TECHNICAL FIELD

The present disclosure relates to a method and apparatus for performing communication by a user equipment (UE) in a wireless communication system.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

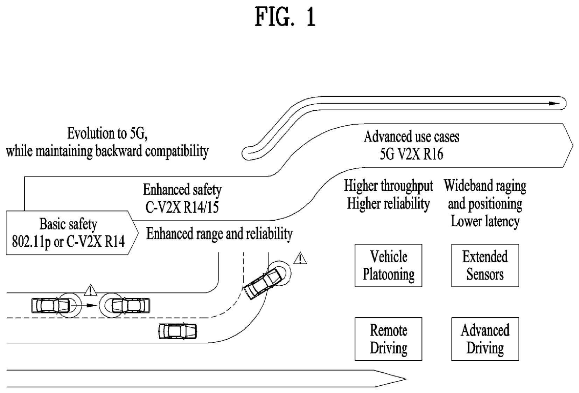

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

The object of the present disclosure is to provide a method of performing communication more accurately and efficiently.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

According to an aspect, a method performed by a user equipment (UE) may include: measuring interference in a connection between the UE and a base station (BS); and reporting, to the BS, interference information including an interference strength of the measured interference. Based on the interference being associated with a mobile integrated access and backhaul (IAB) node, the interference information may further include location information of the mobile IAB node.

Alternatively, the interference information may further include information about a signal strength variation of the mobile IAB node.

Alternatively, the location information of the mobile IAB node may include information about an estimated location and altitude of the mobile IAB node predicted by the UE.

Alternatively, the interference information may further include mobility information of the UE.

Alternatively, the interference information may further include information about at least one of a cell identifier (ID), a public land mobile network (PLMN), or a donor IAB node associated with the mobile IAB node.

Alternatively, based on the UE being connected to the mobile IAB node, the UE may transmit, to the mobile IAB node, a message related to adjusting a location of the mobile IAB node.

Alternatively, the mobile IAB node may be an IAB node moving via an unmanned aerial vehicle (UAV).

According to another aspect, a non-transitory computer-readable recording medium storing instructions for performing the above-described method may be provided.

According to another aspect, a UE for performing the above-described method may be provided.

According to another aspect, a processing device for controlling a UE that performs the above-described method may be provided.

According to another aspect, a method performed by a base station (BS) may include: receiving, from a UE, interference information including an interference strength of interference measured in a connection between the UE and the BS; and based on the interference information further including location information of a mobile IAB node, transmitting, to the mobile IAB node or a donor node of the mobile IAB node, a message requesting a location change of the mobile IAB node.

According to another aspect, a BS for performing the above-described method may be provided.

### ADVANTAGEOUS EFFECTS

According to embodiments of the present disclosure, communication may be performed more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a communication structure available in a sixth-generation (6G) system according to an embodiment of the present disclosure.
FIG. 7 illustrates an electromagnetic spectrum according to an embodiment of the present disclosure.
FIG. 8 illustrates a radio protocol architecture for SL communication.
FIG. 9 illustrates user equipments (UEs) performing V2X or SL communication.
FIG. 10 illustrates resource units for V2X or SL communication.
FIG. 11 shows an example of a BWP, based on an embodiment of the present disclosure.
FIG. 12 illustrates a procedure in which UEs perform V2X or SL communication according to a transmission mode.
FIG. 13 is a diagram for explaining the control plane procedure of L2 U2N relay (UE-to-Network Relay).
FIG. 14 is diagrams illustrating a U2X system.
FIGS. 15 and 16 are diagrams referred to for briefly describing an integrated access and backhaul (IAB) node.
FIGS. 17 and 18 are diagrams illustrating a method for adjusting the location of an unmanned aerial vehicle (UAV) mobile IAB node.
FIG. 19 is a diagram illustrating a method for reporting indirect information associated with a mobile IAB node to a base station (BS) by a UE.
FIG. 20 is a diagram illustrating a method for adjusting the location of a mobile IAB node by a BS based on indirect information associated with the mobile IAB node.
FIG. 21 illustrates a communication system applied to the present disclosure.
FIG. 22 illustrates wireless devices applicable to the present disclosure.
FIG. 23 illustrates another example of a wireless device to which the present disclosure is applied. Wireless devices can be implemented in various forms depending on the use case/service.
FIG. 24 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

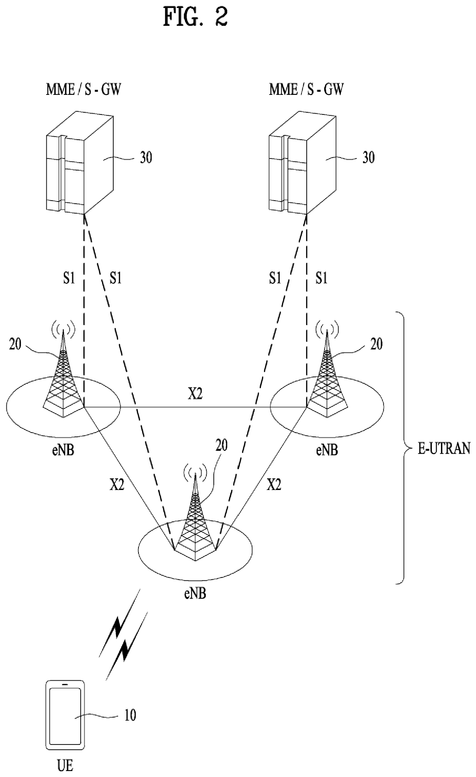

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

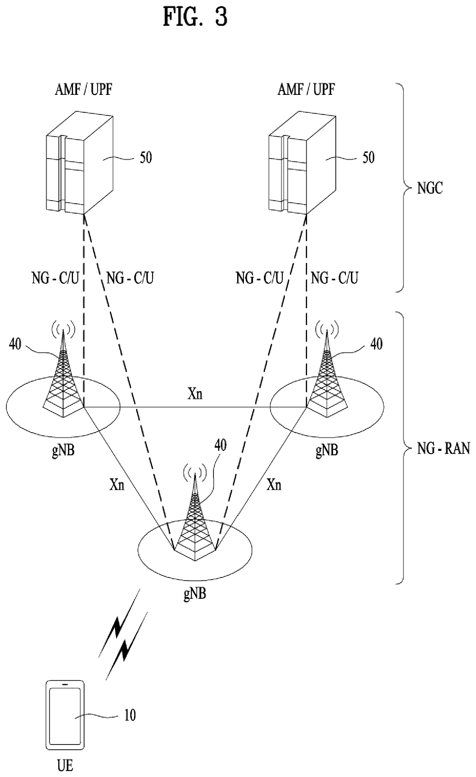

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

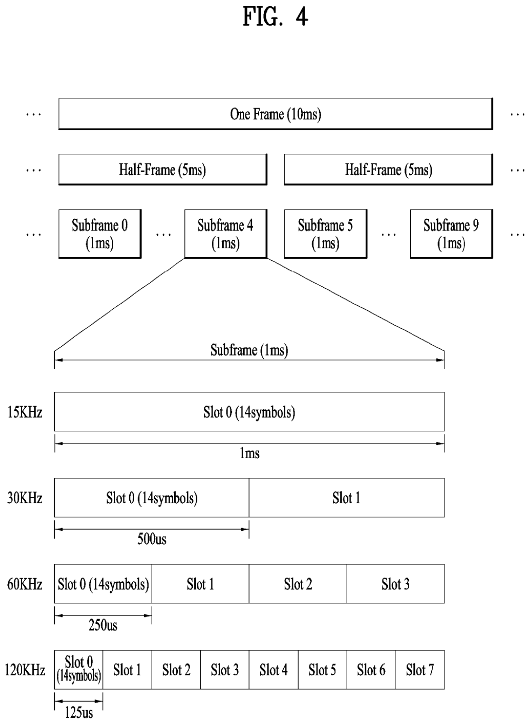

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

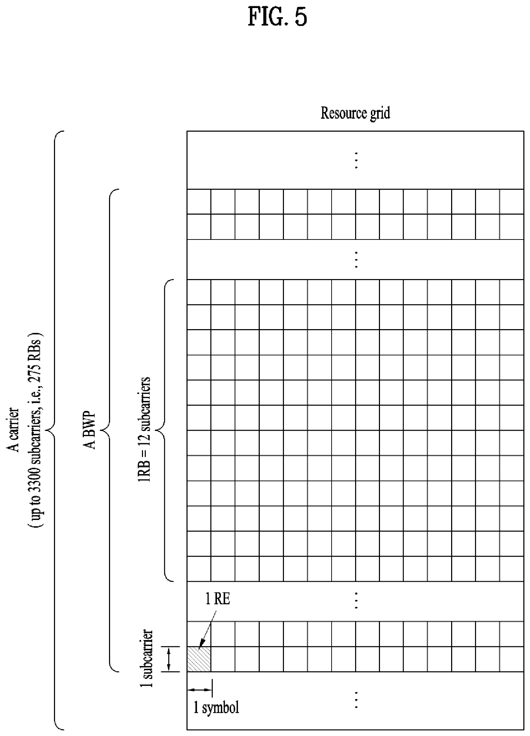

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

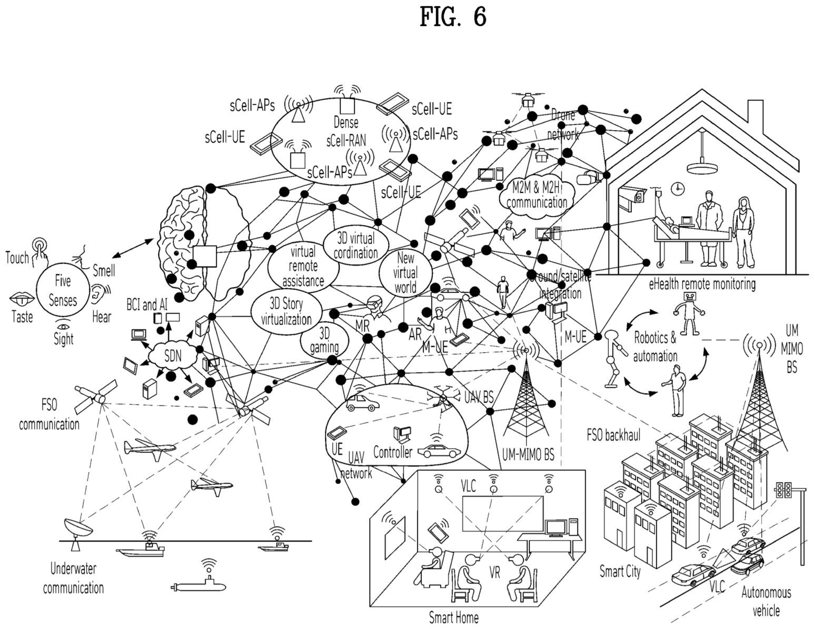

FIG. 6 illustrates a communication structure available in a sixth-generation (6G) system according to an embodiment of the present disclosure. The embodiment of FIG. 6 may be combined with various embodiments of the present disclosure.

In 6G, new network features may include the following.
- Integrated satellite network
- Connected intelligence: In contrast to previous generations of wireless communication systems, 6G may update the wireless advancement from "connected things" to "connected intelligence". Artificial intelligence (AI) may be applied in each step of communication procedures (i.e., each step of signal processing to be described later).
- Seamless integration of wireless information and energy transfer
- Ubiquitous super three-dimensional (3D) connectivity: Access to networks and core network functions pm drones and very low earth orbit satellites may enable super 3D connectivity in 6G universal.

Regarding the new network feature of 6G as described above, several common requirements may include the following:
Small cell networks
Ultra-dense heterogeneous networks
High-capacity backhaul
Radar technology integrated with mobile technology: High-accuracy localization via communication (or location-based service) is one of the functionalities of the 6G wireless communication system. Therefore, radar systems will be integrated with the 6G network.

### Softwarization and virtualization

Hereinafter, the key implementation technologies of the 6G system will be described.
- Artificial intelligence (AI): Introducing AI into communication may simplify and enhance real-time data transmission. AI may determine how complex tasks are performed using numerous analyses. In other words, AI may increase efficiency and reduce processing delays. Time-consuming tasks such as handover, network selection, and resource scheduling may be performed instantly with the use of AI. AI may also play a crucial role in machine-to-machine (M2M), machine-to-human, and human-to-machine communication. In addition, AI may enable rapid communication in a brain-computer interface (BCI). AI-based communication systems may be supported by metamaterials, intelligent architectures, intelligent networks, intelligent devices, intelligent recognition radios, self-sustaining wireless networks, and machine learning.
- Terahertz (THz) communication: Increasing the bandwidth may enhance data transmission rates, which may be achieved by using sub-THz communication with wide bandwidths and applying the advanced massive multiple input multiple output (MIMO) technology. THz waves, also known as submillimeter radiation, typically represent frequency bands between 0.1 THz and 10 THz, corresponding to wavelengths in the range of 0.03 mm to 3 mm. The band range from 100 GHz to 300 GHz (sub-THz band) is considered to be the main part of the THz band for cellular communications. Adding the sub-THz band to mmWave bands increases the capacity of 6G cellular communications. The band from 300 GHz to 3 THz of the defined THz band falls within the far infrared (IR) frequency band. The band from 300 GHz to 3 THz is part of the optical band, but the band lies at the boundary of the optical band and immediately after the RF band. Therefore, this 300 GHz to 3 THz band shows similarities to RF.

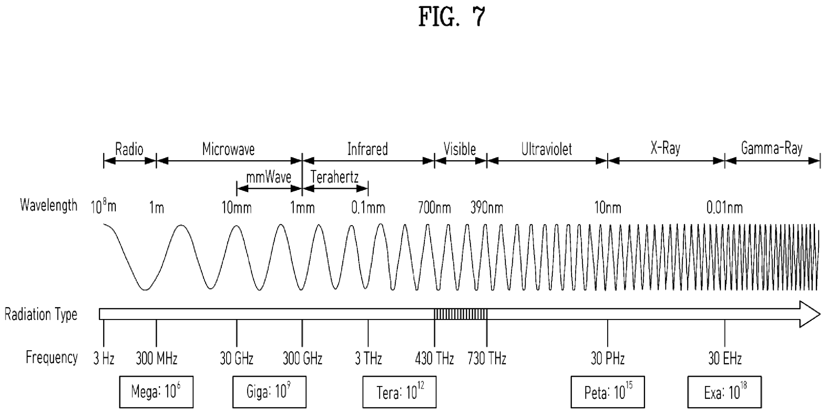

FIG. 7 illustrates an electromagnetic spectrum according to an embodiment of the present disclosure. The embodiment of FIG. 7 may be combined with various embodiments of the present disclosure. The key characteristics of THz communication include: (i) wide available bandwidths to support very high data transmission rates, and (ii) high path losses at high frequencies (highly directional antennas are indispensable). Narrow beamwidths generated by highly directional antennas reduce interference. The small wavelengths of THz signals allow a larger number of antenna elements to be incorporated into devices and BSs operating in this band. This enables the use of advanced adaptive array technologies capable of overcoming range limitations.
- Large-scale MIMO technology
- Hologram beamforming (HBF)
- Optical wireless technology
- Free-space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Blockchain
- Unmanned aerial vehicle (UAV): UAVs or drones will be crucial elements in 6G wireless communication. In many cases, high-data-rate wireless connectivity may be provided using the UAV technology. BS entities may be installed on UAVs to provide cellular connectivity. The UAV may possess specific capabilities not found in fixed BS infrastructure, such as easy deployment, robust line-of-sight links, and degrees of freedom with controlled mobility. During emergencies such as natural disasters, the deployment of terrestrial communication infrastructure may not be economically feasible, and sometimes, it is impossible to provide services in volatile environments. The UAV may easily handle such situations. The UAV will represent a new paradigm in wireless communication. This technology facilitates the three fundamental requirements of wireless networks: enhanced mobile broadband (eMBB), ultra-reliable low latency communications (URLLC), and massive machine type communications (mMTC). In addition, the UAV may support various purposes such as improving network connectivity, fire detection, disaster emergency services, security and surveillance, pollution monitoring, parking monitoring, and accident monitoring. Therefore, the UAV technology is recognized as one of the most important technologies in 6G communication.
- Autonomous driving (self-driving): Vehicle-to-everything (V2X) communication, a key element in establishing autonomous driving infrastructure, refers to a technology that allows vehicles to communicate and share information with various elements on the road, such as vehicle-to-vehicle (V2V) and vehicle-to-infrastructure (V2I) wireless communications. To maximize the performance of autonomous driving and ensure high safety standards, fast transmission speeds and low-latency technologies are essential. In addition, autonomous driving in the future may involve actively intervening in vehicle operation and directly controlling vehicles in hazardous situations beyond just providing warnings or guidance messages to drivers. To accommodate the vast amount of information that needs to be transmitted and received, it is expected in 6G that autonomous driving capabilities will be maximized with faster transmission speeds and lower latency compared to 5G.

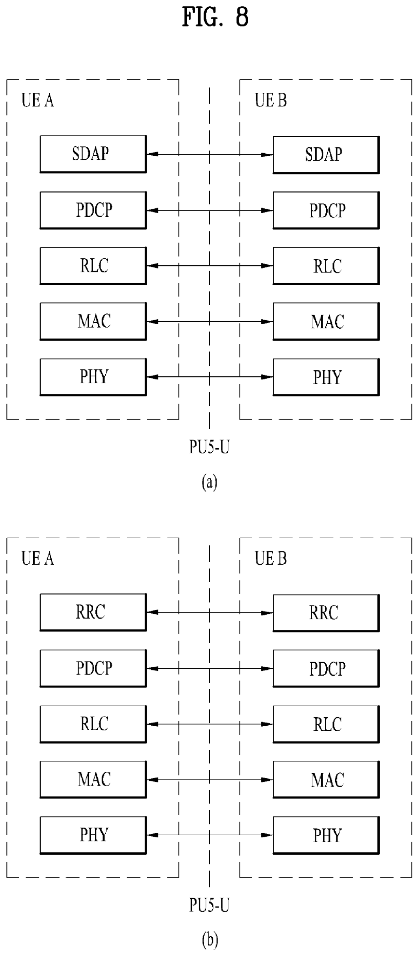

FIG. 8 illustrates a radio protocol architecture for SL communication. Specifically, FIG. 8-(a) shows a user plane protocol stack of NR, and FIG. 8-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

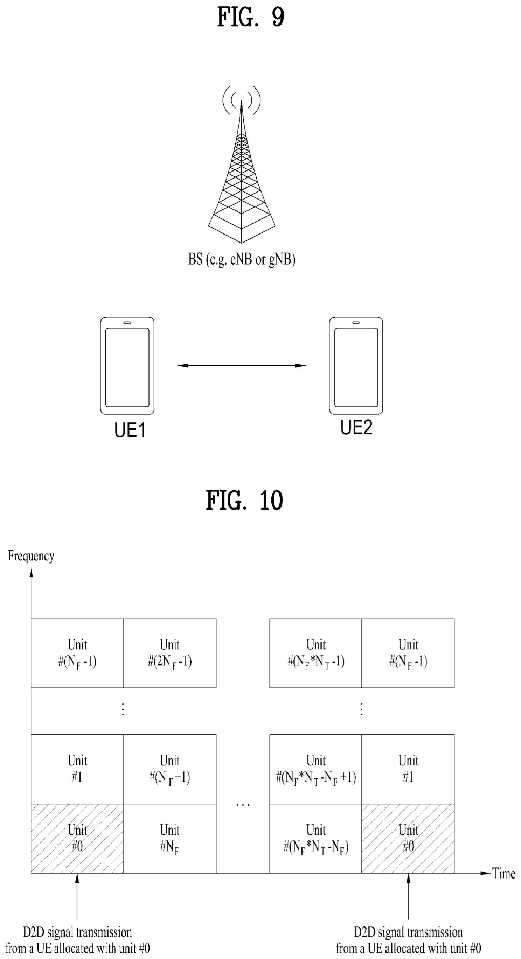

FIG. 9 illustrates UEs performing V2X or SL communication.

Referring to FIG. 9, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 10 illustrates resource units for V2X or SL communication.

Referring to FIG. 10, the frequency resources of a resource pool may be divided into N_{F} sets, and the time resources of the resource pool may be divided into N_{T} sets. Accordingly, a total of N_{F} * N_{T} resource units may be defined in the resource pool. FIG. 10 shows an exemplary case where the resource pool is repeated with a periodicity of NT subframes.

As shown in FIG. 10, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

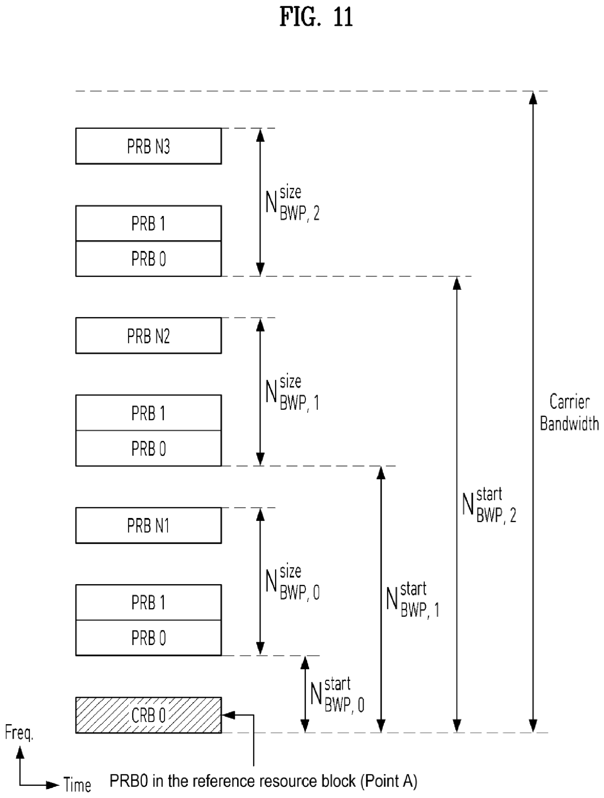

FIG. 11 shows an example of a BWP, based on an embodiment of the present disclosure. The embodiment of FIG. 11 may be combined with various embodiments of the present disclosure. It is assumed in the embodiment of FIG. 11 that the number of BWPs is 3.

Referring to FIG. 11, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described. The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

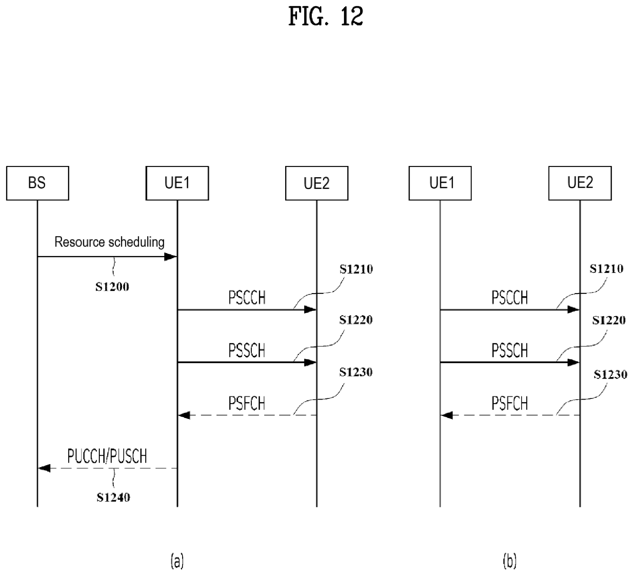

FIG. 12 illustrates a procedure for a terminal to perform V2X or SL communications in accordance with a resource allocation mode, according to one embodiment of the present disclosure. The embodiment of FIG. 12 may be combined with various embodiments of the present disclosure.

Referring to FIG. 12-(a), in LTE transmission mode 1, LTE transmission mode 3 or NR resource allocation mode 1, the BS may schedule an SL resource to be used by the UE for SL transmission. For example, in step S1200, the base station may transmit to the first terminal information associated with the SL resource and/or information associated with the UL resource. For example, the UL resource may include a PUCH resource and/or a PUSCH resource. For example, the UL resource may be a resource for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1210, the first UE may transmit a PSCCH (e.g., sidelink control information (SCI) or 1st-stage SCI) to a second UE based on the resource scheduling. In step S1220, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 12 , in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S1210, a first UE which has selected resource(s) from a resource pool by itself may transmit a PSCCH (e.g., sidelink control information (SCI) or 1st-stage SCI) to a second UE by using the resource(s). In step S1220, the first UE may transmit a PSSCH (e.g., 2nd-stage SCI, MAC PDU, data, etc.) related to the PSCCH to the second UE. In step S1230, the first UE may receive a PSFCH related to the PSCCH/PSSCH from the second UE.

Referring to (a) or (b) of FIG. 12, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 12, at step S1530, the first terminal may receive the PSFCH. For example, the first terminal and the second terminal may determine a PSFCH resource, and the second terminal may use the PSFCH resource to transmit HARQ feedback to the first terminal.

Referring to (a) of FIG. 12, at step S1540, the first terminal may transmit the SL HARQ feedback to the base station via PUCCH and/or PUSCH.

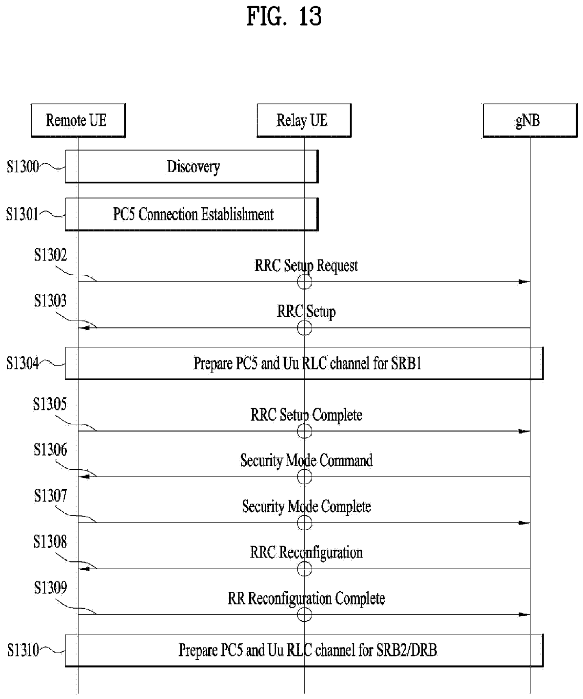

FIG. 13 is a diagram for explaining the control plane procedure of L2 U2N relay (UE-to-Network Relay).

The PC5 unicast link establishment procedure from the PC5-RRC perspective for Rel-16 NR V2X may be reused for establishing a secure unicast link between a Remote UE and a Relay UE for Layer 2 UE-to-Network relaying, before the Remote UE establishes a Uu RRC connection with the network via the Relay UE.

For both in-coverage and out-of-coverage scenarios, when the Remote UE initiates the first RRC message for connection establishment with the gNB, the PC5 L2 configuration for transmission between the Remote UE and the U2N Relay UE may be based on the RLC/MAC configurations defined in the specifications. The establishment of Uu SRB1/SRB2 and DRBs of the Remote UE follows the legacy Uu configuration procedure for Layer 2 UE-to-Network relaying.

A certain scenario described in TS 38.300 specifies the control plane procedure for Layer 2 UE-to-Network relaying as follows.

In step S1300, the remote UE and relay UE may perform a discovery procedure. In step S1301, the remote UE and relay UE may establish a PC5-RRC connection based on legacy Rel-16 procedures.

In step S1302, the remote UE may transmit the first RRC message (i.e., RRCSetupRequest) to establish the connection with the gNB through the relay UE using the default PC5 L2 configuration. The gNB responds to the remote UE with an RRCSetup message (S1303). The default PC5 configuration is used to transmit the RRCSetup message to the remote UE. If the relay UE has not started in the RRC_CONNECTED state, the relay UE needs to establish the connection upon receiving a message about the default PC5 L2 configuration. Details for the relay UE to transmit the RRCSetupRequest/RRCSetup message to the remote UE may be discussed in the work item (WI) phase.

In step S1304, the gNB and relay UE perform a relay channel setup procedure over Uu. Depending on the configuration of the gNB, the relay/remote UE establishes an RLC channel for relaying SRB1 to the remote UE over PC5. This step prepares the relay channel for SRB1.

In step S1305, the SRB1 message (e.g., RRCSetupComplete message) from the remote UE is transmitted to the gNB through the relay UE on the SRB1 relaying channel over PC5. The remote UE establishes the RRC connection over Uu.

In step S1306, the remote UE and gNB establish security according to legacy procedures, and a security message is transmitted through the relay UE.

In steps S1308 and S1309, the gNB transmits an RRCReconfiguration message to the remote UE through the relay UE to establish the SRB2/DRB for relaying. The remote UE responds to the gNB with an RRCReconfigurationComplete message through the relay UE.

In step S1310, the gNB establishes an additional RLC channel between the gNB and relay UE for traffic relay. Depending on the configuration of the gNB, the relay/remote UE establishes additional RLC channels between the remote UE and relay UE for traffic relay. The gNB transmits the RRCReconfiguration message to the remote UE through the relay UE to establish the SRB2/DRB for relaying. The remote UE responds to the gNB with the RRCReconfigurationComplete message through the relay UE.

For L2 U2N relaying in addition to the connection establishment procedure:
- The RRC reestablishment and RRC connection release procedures may reuse legacy RRC procedures along with the message content/configuration design left in the WI phase.
- The RRC connection reestablishment and RRC connection resume procedures may reuse legacy RRC procedures as a baseline by considering the connection establishment procedure of the L2 U2N relay above to handle relay-specific parts along with message content/configuration design. The message content/configuration may be defined at a later stage.

### Unmanned Aerial Vehicle (UAV)-to-everything (U2X)

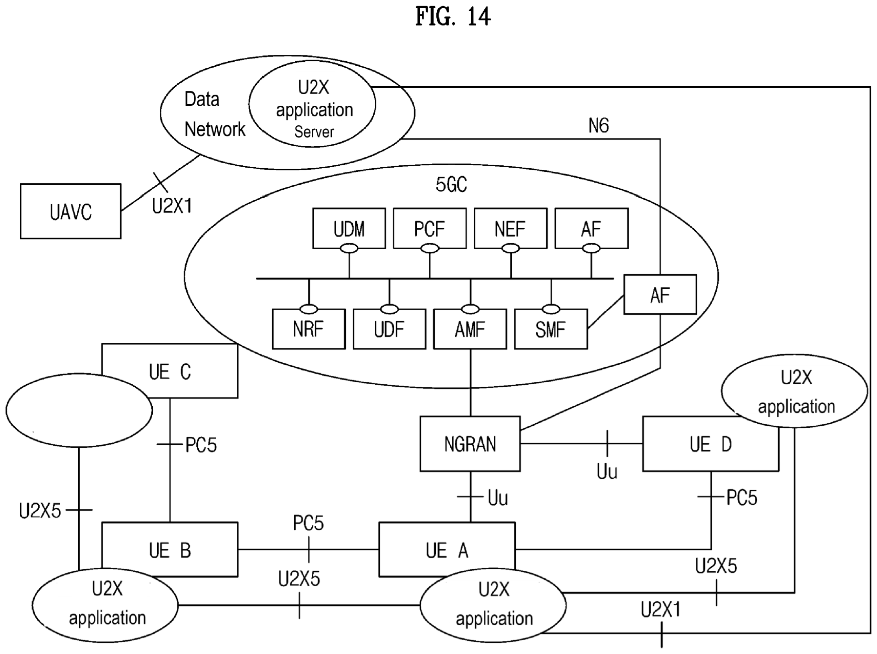

FIG. 14 is a diagram illustrating a U2X system.

The key points of a proposed U2X solution in a specific scenario (TR 23.700-58) are as follows.
- U2X may support BRID and direct DAA by using the V2X mechanism defined in TS 23.287. In this case, both LTE PC5 and NR PC5 as defined in TS 23.285 are supported, and RAT selection may be performed based on a U2XP.
- Communication Mode: For broadcasting UAV identification (BRID), a broadcast communication mode may be used. In DAA, the broadcast communication mode may be used to advertise UAV information. Broadcast via PC5 or unicast via PC5 may be used between two or more UAVs for DAA deconfliction. Unicast via Uu through a U2X AS may not be supported in the above-described U2X solution. A groupcast mode for NR-based PC5 may not be supported in the above-described U2X solution. If NR PC5 is selected, connectionless groupcast communication may be used for DAA. Meanwhile, application layer managed groupcast may not be considered in the current release due to the lack of clear requirements.
- U2X may be supported at a U2X application server, which interfaces with an operator network via an NEF, similar to a V2X application server.

For the specific scenario/solution, a dedicated set of services may be defined, and when a U2X AS providing a UAV and a USS are the same or different entities, multiple deployment scenarios need to be allowed.
- A U2X policy (U2XP) may be defined to provide configuration parameters to a UE for U2X communication via a PC5 reference point or a Uu reference point. These configuration parameters may be preconfigured in a mobile equipment (ME), configured in a universal IC card (UICC), preconfigured in the ME and configured in the UICC, provided/updated by a U2X application server via a policy control function (PCF) and/or a V1 reference point, or provided/updated by the PCF to the UE. The UE needs to consider the U2XP in the order of priority: provided/updated by the PCF, provided/updated by the U2X application server via the V1 reference point, configured in the UICC, and preconfigured in the ME. A deconflicting policy may be a policy indicating a communication mode (unicast or broadcast) and a communication frequency for deconfliction.
- Similar to V2X, a Tx profile or an NR Tx profile may be determined based on U2XP mapping of a U2X service type.
- Both a UAV with a UICC and a UAV without a UICC (i.e., not subscribed to an MNO) may be supported. A UAV without a UICC may perform U2X communication only if authorized as "not provided in E-UTRA" and "not provided in NR".
- U2X communication parameters from the U2X application server or the PCF may be transmitted via a UAV-C UE.
- In addition to the existing parameters for V2X, a geographic area, an altitude restriction, and a validity period timer may be set as radio parameters specific to a PC5 RAT (e.g., LTE PC5 and NR PC5). Such additional information/parameters may be needed to politically control PC5 usage according to a specific location of a UAV.
- The definition of a DAA/UAV service type may go beyond the scope of the above-described specific scenario.
- To use PC5-based communication for BRID and DAA in a UAV with a UICC, successful UUAA authentication/authorization as defined in TS 23.256 and authorization via U2XP should occur. However, the Federal Aviation Administration (FAA) does not require specific authorization for PC5 use for BRID or DAA. For a UAV without a UICC, the use of PC5-based communication for BRID and DAA may be authorized only by a U2XP. A U2X service may be identified by one of an ITS application identifier (ITS-AID), a provider service identifier (PSID), and an application identifier (AID) according to a value specifically defined for aviation applications.
- Similar to TS 23.287, security for broadcast U2X communication via a PC5 reference point may be supported by a U2X application layer scheme developed in other SDOs.

Referring to FIG. 14, a non-roaming 5G system architecture for U2X communication via PC5 may be configured as illustrated in FIG. 14. The reference points of TS 23.287 may be applied to the non-roaming 5G system architecture for U2X communication via PC5, with the following differences.
- U2X1:The reference point between the U2X applications in the UE, the UAV-C, and the U2X application server. This reference point is out of the scope of the specific scenario.
- U2X5:The reference point between the U2X applications in the UE. This reference point is not specified in this release of the specific scenario.
- N1: In addition to the relevant functions defined in TS 23.501 for N1, in the case of the U2X service, it is also used to convey the U2X policy and parameters (including service authorization) from the AMF to the UE and to convey the U2X capability and PC5 capability of the UE for U2X information from the UE to the AMF.
- N2: In addition to the relevant functions defined in TS 23.501 for N2, in the case of the U2X Service it is also used to convey the U2X policy and parameters (including service authorization) from the AMF to the NG-RAN.
- The above solution may support a UAV UE that utilizes Uu connectivity and a UAV UE that does not utilize Uu connectivity (i.e. either a UAV UE that is Uu capable or a UAV UE that does not use Uu). A UAV without utilizing Uu capabilities may use U2X for BRID and DAA and be configured via U2X1 over a transport outside the scope of the 3GPP. UAV UEs without utilizing Uu capabilities are part of the 3GPP ecosystem since they use U2X1 for configuration by a U2X application server and implement PC5 connectivity specified by the 3GPP.

An inter-PLMN 5G system architecture for U2X communication through a PC5 reference point may be as follows.
- For inter-PLMN U2X communication via the PC5 reference point, PC5 parameters need to be set in a consistent manner among UEs within a specific area.
- The architecture for inter-PLMN PC5 may be similar to the defined non-roaming 5G system architecture for U2X communication via PC5 described with reference to FIG. 14.

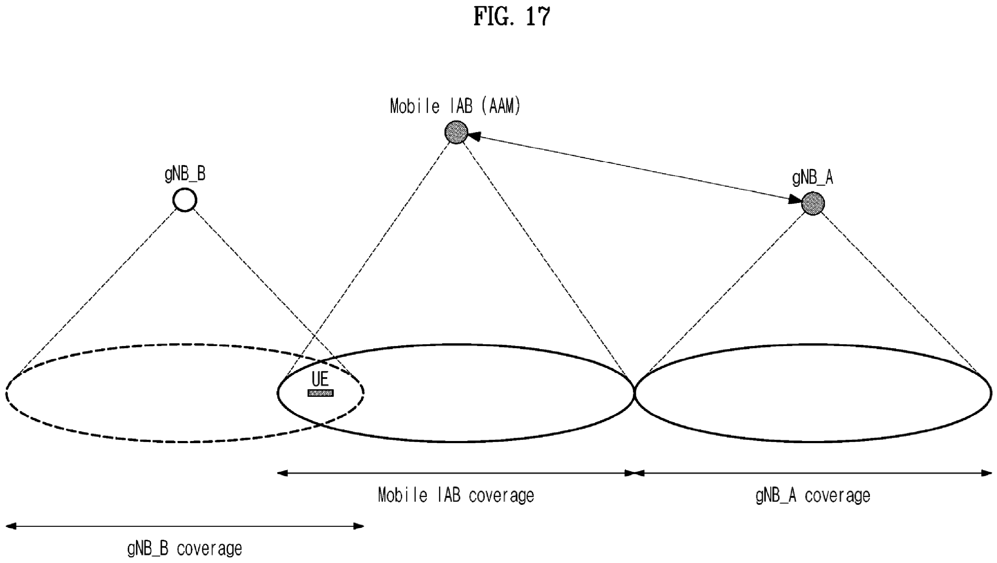

AF-based service parameter provisioning for U2X communication may be defined as follows.
- As defined in TS 23.287, the 5G system may provide NEF services to enable communication between an NF in a PLMN and a U2X application server. FIG. 17 may illustrate a high level view of AF-based service parameter provisioning for U2X communication. Service parameters may also be preconfigured in UAVs (e.g. which do not utilize Uu capabilities) using methods that are out of the 3GPP scope.

The following may be considered in the U2X scenario.
- Use/usage of U2X for BRID: The contents of a message for BRID are defined according to the regional regulations for BRID (e.g. message set of ASTM F3411.19 or ASD-STAN prEN 4709-002 P1) and optionally according to the regional mean of compliance documents.
- Use/usage of U2X for DAA: The contents of a message for DAA are defined according to the regional regulations for DAA and may be out of the scope of the above-described specific scenario.

Impacts on the above-described services, entities, and interfaces related to U2X may be as described in Table 5 and Table 6.

**[Table 5]**

| |
|---|
| 1. UE: In addition to the functions defined in TS 23.501, the UE may support the following functions: |
| - Report the U2X Capability (including DAA Capability) and PC5 Capability for U2X to 5GC over N1 reference point. |
| - Indicate U2X Policy Provisioning Request in UE Policy Container for UE triggered U2X Policy provisioning. |
| - Receive the U2X parameters from 5GC over N1 reference point. |
| - Procedures for U2X communication over PC5 reference point. |
| - Configuration of parameters for U2X communication. These parameters can be pre-configured in the UE, or, if in coverage, provisioned or updated by signalling over the N1 reference point from the PCF in the HPLMN or over U2X1 reference point from the U2X Application Server. |
| 2. AMF: In addition to the functions defined in TS 23.501, the AMF performs the following functions: |
| - Obtain from UDM the subscription information related to U2X and store them as part of the UE context data. |
| - Select a PCF supporting U2X Policy/Parameter provisioning and report the PC5 Capability for U2X to the selected PCF. |
| - Obtain from PCF the PC5 QoS information related to U2X and store it as part of the UE context data. |
| - Provision the NG-RAN with indication about the UE authorization status about U2X communication over PC5 reference point. |
| - Provision the NG-RAN with PC5 QoS parameters related to U2X communication. |
| - PCF: In addition to the functions defined in TS 23.501, the PCF includes the functions described in 23.287 to provision the UE and AMF with necessary parameters in order to use U2X communication. |
| - UDM: Subscription management for U2X communication over PC5 reference point. The UE subscription data types are extended according to the following table 6. |
| 3. U2X Application Server: implements a subset of the V2X AS functionality specified in TS 23.287: |
| - includes AF functionality, and may support at least the following capabilities: |
| - For U2X service parameters provisioning, the U2X AS provides the 5GC and the UAV UE (possibly via the UAVC) with parameters for U2X communications over PC5 and Uu reference points. |
| - UDR: In addition to the functions defined in TS 23.501, the UDR stores U2X service parameters. |
| - NRF: In addition to the functions defined in TS 23.501, the NRF performs PCF discovery by considering U2X capability. |
| - NEF: for U2X AS, the NEF supports U2X service parameters. |

**[Table 6]**

| | | | |
|---|---|---|---|
| U2X Subscription data | NR U2X Services Authorization | Indicates whether the UE is authorized to use the NR sidelink for U2X services as UAV UE, UAV-C UE, or Authority UE. | |
| | LTE U2X Services Authorization | Indicates whether the UE is authorized to use the LTE sidelink for U2X services as UAV UE, UAV-C UE, or Authority UE. | |
| | NR UE-PC5-AMBR | AMBR of UE's NR sidelink (i.e. PC5) communication for U2X services. | |
| | LTE UE-PC5-AMBR | AMBR of UE's LTE sidelink (i.e. PC5) communication for U2X services. | |

In addition, the matters recently discussed regarding the measurement report related to the above-described predetermined scenario are as follows.
- Use LTE principle as a baseline, introduce similar event H1 (aerial UE height become higher than threshold) and H2 (aerial UE height become lower than threshold. FFS if further NR enhancements are needed. FFS study scaling of RRM parameters (e.g. which parameters and what is the purpose/benefit of the scaling and how)
   -- FFS how to limit excessive measurements and measurement reporting.
   -- FFS if user consent is needed for location reporting in CONNECTED
- Rel-18 NR supports reporting of UAV UE's height, location and velocity. It is for further study what accuracy and reporting mechanisms are required and if further enhancements are needed.
- As in LTE, flight path plan reporting will be introduced. Location list of waypoints (3D location information) and timestamp is adopted as the basic content of flight path report. FFS if timestamp is mandatory or optional for NR. FFS if further enhancements are needed.
- Introduce similar functionality to LTE (numberofTriggeringCells). FFS whether numberoftriggerbeams for NR is required or other enhancements. FFS study how to avoid sending the measurement reports mainly due to reportOnLeave.
- A waypoint is a planned location for the UE along the flight path and is described via the existing parameter type LocationCoordinates defined in TS 37.355.
- A timestamp provides the UTC time associated with estimated time of arrival to a waypoint as baseline. FFS on granularity.
- No requirements are placed on spatial distribution of waypoints.
- A UE indicates whether flight plan information is available within the RRCReconfigurationComplete, RRCReestablishmentComplete, RRCResumeComplete, or RRCSetupComplete message. Flight path reporting uses at the UE Information request/response procedure as baseline.
- UE indicates to the network a new flight path is available in the UE (whether it is initial or update). Then, reuse the normal request/response procedure of flight path report.
- UAI message can also be used to indicate the UE has flight path availability.
- FFS whether and what triggering conditions are specified for flight update. FFS The maximum number of waypoints within flight path plan is left FFS.
- When event H1 or H2 triggers, the content of the measurement report is configurable by the network (i.e. it can contain UAV UEs height, location information and/or RSRP/RSRQ measurement results). FFS whether UAV UE's height is mandatorily reported and which parameter/IE is used for height reporting
- Joint use of height-dependent condition and RSRP/RSRQ/SINR-based condition for measurement report triggering is supported in NR Rel-18 UAV. The combination of existing events will be used.
- Height-dependent parameter scaling is not supported as a part of Rel-18 NR
- Do not extend the Number of triggering cells mechanism to apply to the inter-RAT scenario, i.e. event B1 and B2 triggering.
- Do not restrict the applicability of Number of triggering cells mechanism to FR1 only. In other words, the Number of triggering cells mechanism is applicable to FR1 and FR2 (up to network configuration).
- The UE shall not ignore or bypass the Number of triggering cells mechanism, once configured.
- Do not introduce the use of a "numberOfTriggeringBeams" mechanism.
- Do not introduce an alternative mechanism to the Number of triggering cells mechanism.
- Do not introduce an additional mechanism based on Number of changed cells.
- For the purpose of interference control (i.e. for number of trigger cells), do not introduce a prohibit timer mechanism.
- Report on leave is not triggered by a cell that was not previously included in the measurement report for the number of triggering cell.
- Support configuring height-dependent more-than-one configurations targeting measurement and measurement reporting enhancement. UE applies corresponding configuration based on the UE height. The proposed solutions should aim at avoiding RAN4 impacts. FFS how this would be configured (i.e. different MO configurations or different parameters FFS Exact parameters and details.
- Height-dependent more-than-one configurations is supported on parameter/field level (i.e. different fields/values within the same MO) where different values (or value ranges) of the parameter/field applies to different height or height range.
- For MO configuration parameters: at least the following will have ability to be configured with height-dependent more-than-one configurations/values, each for a specific height region: SSB-ToMeasure. Details on how to specify is FFS. FFS on UE behavior on L1 and L3 measurement.
- For MR configuration parameters: at least the following will have ability to be configured with height-dependent more-than-one configurations/values, each for a specific height region: Event A4 threshold and numberoftriggeringcells. Details on how to specify is FFS (i.e. maybe it can be achieved by combination of events).
- When height-dependent more-than-one configurations are provided, UE applies the new value once it moves to new height (or height range) similar to the case of RRC reconfiguration. Need Codes, field descriptions, etc. as in legacy specifications apply.

If a height-specific value is not explicitly configured for certain height, whether to keep using the value that was used or consider the parameter as released (i.e. parameter/value not applicable at this height) should be looked into case by case, and can be clarified by need code, field description, or procedural text as needed.

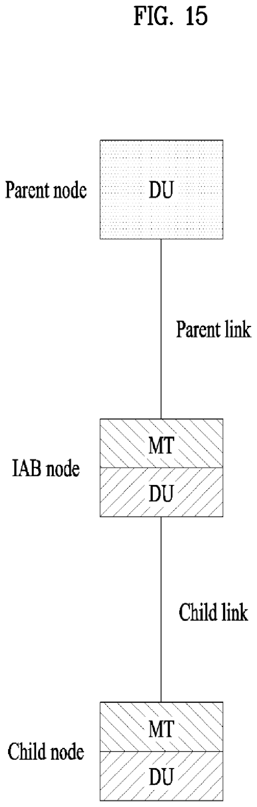

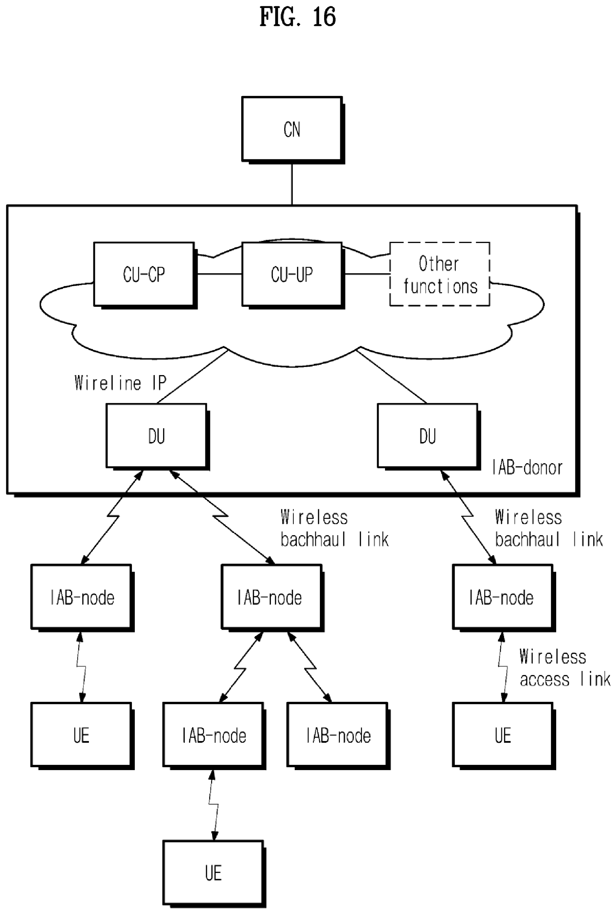

FIGS. 15 and 16 are diagrams referred to for briefly describing an integrated access and backhaul (IAB) node

As shown in FIG. 15, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a time division multiplexing (TDM) operation in which a DU and an MT operate through different time resources has been performed. On the other hand, resource multiplexing such as SDM/FDM, FC, etc. between the DU and the MT is required for efficient resource operation. As shown in FIG. 8, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

N MT-CCs and M DU-cells may exist in the IAB node. MT-CCs existing in the IAB node may operate through the same or different frequency resources, and one MT-CC may be connected to one or more parent DU-cells. DU-cells existing in the IAB node may operate through the same or different frequency resources.

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.
- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

Referring to the standard specification document 3GPP TS 38.874 in relation to IAB, the existing functions and interfaces defined for access may be reused for IAB. In particular, the mobile termination (MT), gNB-DU, gNB-CU, UPF, AMF, and SMF, as well as the corresponding interfaces NR Uu (between the MT and the gNB), F1, NG, X2, and N4, may be used as the basis of the IAB architecture. Modifications or enhancements to these functions and interfaces for supporting IAB may be described in the context of architectural discussions. Additional functions, such as multi-hop forwarding, may also be included in the architectural discussions, since they are necessary for understanding IAB operation and certain aspects thereof may require standardization. The MT function is defined as a component of mobile equipment. The MT is a function residing in an IAB node, at which the radio interface layers of a backhaul Uu interface toward an IAB donor or another IAB node may be terminated.

Specifically, referring to FIG. 16, a reference diagram for IAB in a standalone mode including one IAB donor and multiple IAB nodes is illustrated. The IAB donor may be treated as a single logical node including a set of functions such as a gNB-DU, a gNB-CU-CP, a gNB-CU-UP, and potentially other functions. In a deployment, the IAB donor may be split according to the functions included in the function set, and such functions may or may not be co-located, as permitted by the 3GPP NG-RAN architecture. When such a split is implemented, IAB-related aspects may arise. Further, some functions currently associated with the IAB donor may be moved outside the donor if it becomes clear that the functions do not perform IAB-specific operations.

The above-described IAB may also be used in the form of a mobile IAB node, for coverage extension. In this case, the mobile IAB node may be interpreted as having mobility. For example, the mobile IAB node may be mounted and operated on an unmanned aerial vehicle (UAV) (and/or an advanced air mobility (AAM) vehicle or an aerial mobility device). Hereinafter, problems that may arise due to the introduction of such a mobile IAB node, solutions therefor, and methods for efficiently using a UAV-based mobile IAB node will be described in detail.

### Method for Configuring Movement Location of Mobile IAB Node

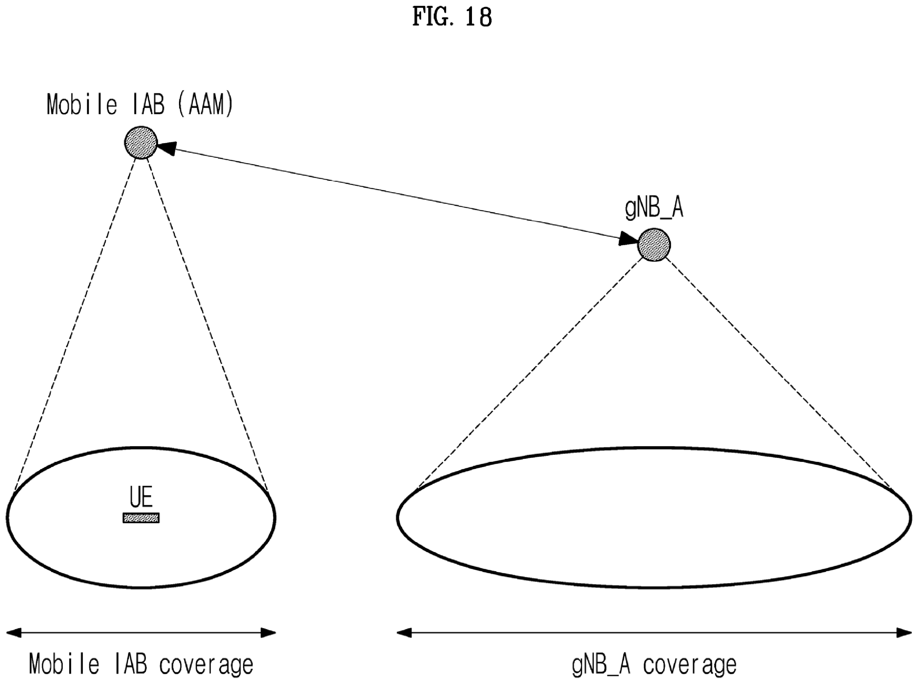

FIGS. 17 and 18 are diagrams illustrating a method for adjusting the location of a UAV-based mobile IAB node.

Referring to FIG. 17, a mobile IAB node connected to/mounted on a UAV may be used for coverage extension. gNB_A may serve as a donor or donor node of the mobile IAB node. The mobile IAB node may be allocated resources from gNB_A and receive a control message from gNB_A.

The mobile IAB node may broadcast that it is a mobile IAB node or a UE corresponding to a mobile IAB node. For example, the mobile IAB node may broadcast that it is a mobile IAB node via a message such as a master information block/system information block (MIB/SSB). In addition, mobility information (a movement speed, a movement speed variation, a movement direction, and/or location information (e.g., a latitude and/or a longitude, or a specific region)) of the mobile IAB node may also be broadcast. Upon receipt of the information about the mobile IAB node, a terrestrial gNB and/or a terrestrial UE may determine, before and/or after attempting to establish a connection with the mobile IAB node, which mobile IAB node is suitable for connection establishment, and may attempt to establish (/maintain) a connection with the mobile IAB node determined to be suitable. For example, the terrestrial UE may prefer a connection with a mobile IAB node (or a mobile IAB node UE) moving in the same direction as the terrestrial UE. In this case, when selecting a mobile IAB node (and/or a gNB) with which to establish a connection, the terrestrial UE may additionally consider mobility information such as the movement direction and/or movement speed of the mobile IAB node, in addition to the signal strength of the mobile IAB node.

Alternatively, when the terrestrial UE is in an RRC_CONNECTED state with gNB_B, the terrestrial UE may measure interference from a nearby mobile IAB node (and/or detect a characteristic that interferes with reception of a signal from a current serving cell). In this case, the terrestrial UE may report information about the interference caused by the mobile IAB node to gNB_B, which is the serving cell of the terrestrial UE. The terrestrial UE may report the following information to gNB_B.
- A magnitude of interference, a signal strength of an adjacent/neighboring mobile IAB node, a signal strength of the serving gNB, and a signal strength variation of the mobile IAB node. Information about the directionality of the mobile IAB node may be provided based on the signal strength variation (i.e., a degree of increase/decrease in signal strength) between the terrestrial UE and the mobile IAB node caused by movement of the mobile IAB node.
- Mobility information of the terrestrial UE. The mobility information may include a movement speed of the terrestrial UE, an amount of increase/decrease in movement speed, a movement direction, and/or location information of the terrestrial UE (e.g., a latitude, a longitude, an altitude, a specific region, and/or a GPS value of the UE).
- Location information of the mobile IAB node measured/estimated by the terrestrial UE (e.g., a latitude, a longitude, an altitude, a specific region, and/or a GPS value received from the mobile IAB node).
- Information about a gNB, a cell, and a public land mobile network (PLMN) associated with the mobile IAB node, and/or information about a donor IAB or donor node of the mobile IAB node.

In this case, based on the interference information reported by the terrestrial UE, the gNB may recommend and/or request relocation of the mobile IAB node to the donor IAB or donor node of the nearby/neighboring mobile IAB node that is currently affecting the terrestrial UE, via a backhaul interface. For example, upon receipt of information about the mobile IAB node causing interference to the terrestrial UE, gNB_B may transmit information about the interference/direction associated with the mobile IAB node to the donor node (gNB_A or the donor IAB) of the mobile IAB node, and request adjustment of the location of the mobile IAB node. The relocation of the mobile IAB node may include not only movement in a two-dimensional plane but also movement in terms of altitude. For example, the gNB may identify, based on the location information of the mobile IAB node included in the interference information, a mobile IAB node requiring location adjustment, and transmit, to the identified mobile IAB node or to the donor node of the mobile IAB node, a message requesting that the mobile IAB node move in a predetermined direction or to a specific location.

Referring to FIG. 18, a terrestrial UE or a UE may be connected to a mobile IAB node. In this case, the terrestrial UE may request and/or recommend that the connected mobile IAB node move to a location desired by the terrestrial UE. For example, the terrestrial UE may transmit a message for adjusting the location of the mobile IAB node, or a position adjustment-related message to the mobile IAB node or to the donor node of the mobile IAB node. For example, the mobile IAB node may provide its location information (e.g., a latitude, a longitude, an altitude, a specific region, and/or GPS information) and/or mobility information (e.g., a movement direction, a movement speed, and a variation in movement speed) to the UE. In this case, the terrestrial UE may request/recommend that the mobile IAB node move to a specific location or a new location based on the location information (and/or mobility information) of the mobile IAB node and the location information (and/or mobility information) of the terrestrial UE. The terrestrial UE may notify the mobile IAB node of the new location or specific location via a latitude, a longitude, an altitude, a specific region, and/or GPS coordinate information. (Additionally/alternatively), the terrestrial UE may configure/provide, to the mobile IAB node, information about an offset between the location of the terrestrial UE and the location of the mobile IAB node. For example, the terrestrial UE may request/recommend, via the offset information, that the mobile IAB node be located within the offset relative to the location of the terrestrial UE. For example, the terrestrial UE may recommend/request/configure that the mobile IAB node be located at a position where the difference between the location (longitude, latitude, and/or altitude) of the terrestrial UE and the location (longitude, latitude, and/or altitude) of the mobile IAB node does not exceed the offset. Upon receipt of a message for the recommendation/request/configuration, the mobile IAB node may perform an operation for positioning itself within the offset or at the specific location (i.e., a location adjustment or relocation operation). For example, the mobile IAB node may adjust its location to a specific location or to a location within the offset according to the recommendation/request/configuration message so that a link quality with the terrestrial UE may be maintained at a specific level. This location adjustment operation of the mobile IAB node may be suitable for communication characteristics vulnerable to blockage, such as mmWave communication.

Alternatively, the mobile IAB node may forward, to its donor node, the recommendation/request information regarding movement to the specific location or maintenance of the location within the offset, received from the terrestrial UE. The mobile IAB node may also forward the location information and/or mobility information of the terrestrial UE to the donor node. In this case, the donor node may globally rearrange the locations of the mobile IAB node (or mobile UAV UE) and/or other mobile IAB nodes (or other mobile UAV UEs) based on the recommendation/request information and the location information and/or mobility information of the terrestrial UE. This may allow the donor node to comprehensively control the positional distribution of the mobile IAB nodes. For example, a terrestrial UE may request/recommend/configure its serving mobile IAB node to relocate, while another mobile IAB node may be present along the movement direction of the terrestrial UE. In this case, it may be expected that the donor IAB does not or will not instruct relocation of the serving mobile IAB node. For example, even though the terrestrial UE has requested adjustment/change of the location of its serving mobile IAB node, a service may be provided via another mobile IAB node located in the movement direction of the terrestrial UE, and thus the donor IAB may not need to adjust the location of the serving mobile IAB node.

Alternatively, upon receipt of a message recommending/requesting/configuring movement of a mobile IAB node from a specific terrestrial UE, the mobile IAB node may command/instruct its connected other terrestrial UEs to report their location information (and/or mobility information). In this case, the mobile IAB node may determine whether to change/adjust its location based on the reported location information from the other terrestrial UEs.

Prior to executing a relocation, the mobile IAB node may transmit an advance notification associated with its relocation to its parent node and/or child node. The advance notification may include location information (and/or mobility information) about a location to which the mobile IAB node intends to move. This may enable nodes currently connected to the mobile IAB node intending to move to perform pre-emptive operations for preparing for the relocation of the mobile IAB node based on the advance notification. For example, child nodes connected to the mobile IAB node intending to relocate may proactively attempt operations for discovering and (re)connecting to another IAB node, based on the advance notification from the mobile IAB node.

Alternatively, the mobile IAB node may determine a location at which it may provide the highest communication performance based on integrated information obtained from not only a communication module but also a camera and sensors.

As described above, according to the proposed method, a terrestrial UE may effectively adjust the location of its connected mobile IAB node. Alternatively, when a terrestrial UE connected to a gNB detects interference caused by a mobile IAB node, the proposed method enables the terrestrial UE to report, to the gNB, interference information including not only information about the magnitude of the interference but also location information of the mobile IAB node. Accordingly, the proposed method may promptly notify the gNB that a change in the location of the mobile IAB node is required for effective mitigation of the interference. Alternatively, as the location information of the mobile IAB node is additionally included in the interference information, the gNB may clearly identify the mobile IAB node requiring location adjustment, and rapidly calculate a target location to which the mobile IAB node is to move in order to eliminate the interference.

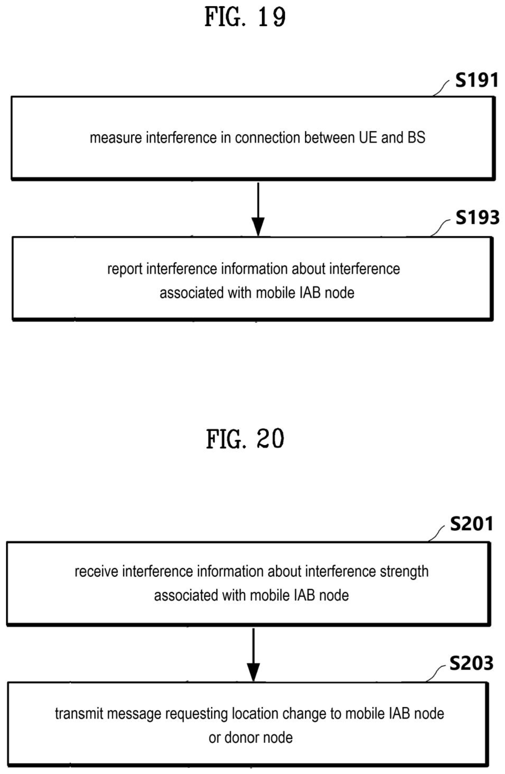

FIG. 19 is a diagram illustrating a method for reporting indirect information associated with a mobile IAB node to a BS by a UE.

Referring to FIG. 19, the UE may measure interference in a connection between the UE and the BS (S191). For example, the UE may monitor whether the measured interference is greater than or equal to a preset threshold. The interference may be caused by a signal transmitted by another BS/cell/IAB node adjacent to the BS.

The UE may then report interference information including an interference strength of the measured interference to the BS (S193). For example, when the interference strength of the measured interference is greater than or equal to the preset threshold, the UE may report interference information including information about the interference strength to the BS. When the interference is caused by a mobile IAB node rather than by a conventional cell/BS, the UE may additionally report other information to the BS in addition to the interference strength. For example, the UE may further include, in the interference information, or report together with the interference information, at least one of information about a signal strength variation of the mobile IAB node, location information of the mobile IAB node, mobility information (e.g., a speed and a movement direction) of the mobile IAB node, mobility information of the UE, or identification information (e.g., a cell ID, a PLMN, and/or a donor IAB node) of the mobile IAB node. In this case, as the information about the mobile IAB node is additionally included in the interference information, the UE may inform the BS that the location or movement direction of the mobile IAB node needs to be controlled to mitigate/remove the interference strength.

For example, the UE may provide information about the directionality of the mobile IAB node by reporting, to the BS, information indicating how much the signal strength of the mobile IAB node changes over a preset period of time. Alternatively, the UE may estimate/predict the location, altitude, and the like of the mobile IAB node based on signal characteristics (e.g., a Doppler effect and an angle of arrival of a signal) of the mobile IAB node and/or cell information broadcast by the mobile IAB node, and may also estimate/predict the movement direction of the mobile IAB node. In this case, the UE may inform the BS that the location and/or movement direction of the mobile IAB node needs to be modified/adjusted to remove/mitigate the interference by reporting the interference information additionally including the information about the mobile IAB node. Further, since the BS may not know the location of a mobile IAB node belonging to another donor node, the UE may provide the estimated/predicted location information and/or mobility information of the mobile IAB node to the BS so that the BS may clearly identify the mobile IAB node that causes the interference.

As described above, when the source causing interference is a mobile IAB node, the UE may additionally provide information about the mobile IAB node to the BS in the report of the interference information, thereby informing the BS of which mobile IAB node causes the interference and that the interference needs to be mitigated/removed through control of adjustment/change of the location of the mobile IAB node. In this case, based on the information about the mobile IAB node additionally provided together with the interference information, the BS may identify/specify the mobile IAB node and transmit, to the mobile IAB node and/or to a donor node associated with the mobile IAB node, a message for adjusting/changing the location of the identified/specified mobile IAB node.

Alternatively, when the UE is connected to the mobile IAB node, the UE may directly provide, to the mobile IAB node, a message requesting/proposing adjustment/change of the location of the mobile IAB node.

Alternatively, the mobile IAB node may be an IAB node included in/mounted on a UAV and moving at an altitude at or above a predetermined height, as described above.

FIG. 20 is a diagram illustrating a method for adjusting the location of a mobile IAB node by a BS based on indirect information associated with the mobile IAB node.

Referring to FIG. 20, the BS may receive, from the UE, interference information including an interference strength corresponding to interference measured in a connection between the UE and the BS (S201). Based on the interference information further including location information of a mobile IAB node, the BS may transmit, to the mobile IAB node or to a donor node of the mobile IAB node, a message requesting a change in the location of the mobile IAB node (S203).

For example, when the indirect information further includes location information of the mobile IAB node, the BS may recognize that the location of the mobile IAB node needs to be controlled/adjusted to mitigate or remove the interference to the UE. Specifically, based on the location information of the mobile IAB node included in the interference information, the BS may identify the location of the mobile IAB node that causes interference to the connection between the UE and the BS. Based on the location information of the UE and/or the location information of the mobile IAB node, the BS may determine to which location or in which direction the mobile IAB node needs to move in order to remove the interference. In this case, the BS may request/propose adjustment of the location of the mobile IAB node by transmitting, to the mobile IAB node and/or the donor node, a message including information about the location or movement direction to which the mobile IAB node needs to move in order to remove/mitigate the interference.

Alternatively, based on a variation in signal strength of the mobile IAB node included in the indirect information, the BS may predict a movement direction of the mobile IAB node and determine whether the interference may be removed/mitigated without controlling the location of the mobile IAB node. For example, when the BS determines that the variation in signal strength of the mobile IAB node is gradually decreasing, the BS may determine that the mobile IAB node is moving away from the UE and may refrain from performing location control of the mobile IAB node. Alternatively, when the BS determines that the variation in signal strength of the mobile IAB node is gradually increasing, the BS may transmit, to the mobile IAB node or the donor node, a message for controlling movement of the mobile IAB node such that the mobile IAB node moves in a movement direction (e.g., an opposite direction) different from its current movement direction.

As described above, according to the proposed method, the location of a mobile IAB node may be efficiently controlled based on interference information associated with a connection between a BS and a UE. In addition, the proposed invention may enable the BS to promptly perform location control of the mobile IAB node for interference removal by additionally including identification information of the mobile IAB node associated with the interference in the interference information of the connection between the UE and the BS. Alternatively, the proposed method may effectively maintain a link quality between the UE and the mobile IAB node even in an mmWave communication environment by allowing the UE to directly provide location adjustment/control-related information to the mobile IAB node connected to the UE.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

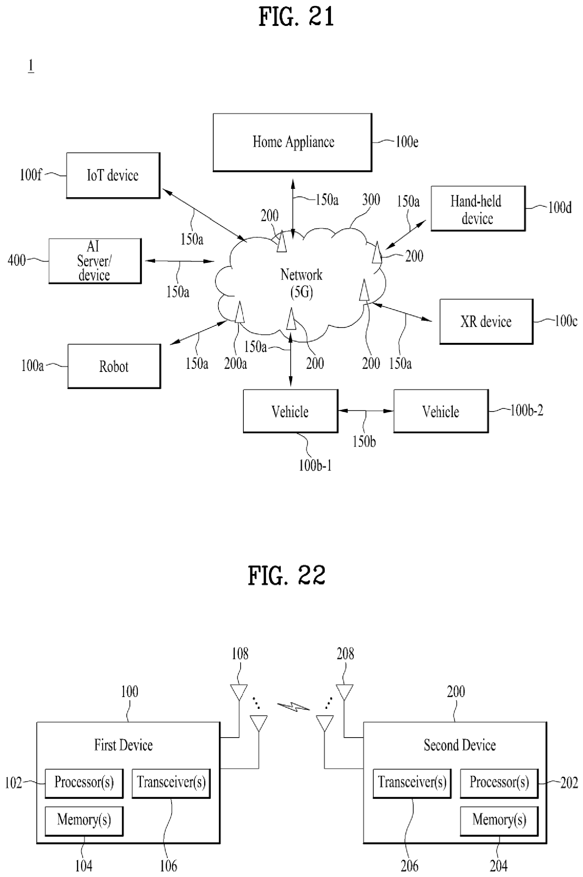

FIG. 21 illustrates a communication system applied to the present disclosure.

Referring to FIG. 21, a communication system 1 applied to the present disclosure includes wireless devices, BSs (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 22 illustrates a wireless device applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or first UE 100 may include the processor 102 connected to the transceiver 106, and the memory 104. The memory 104 may include at least one program for performing operations related to the embodiments described with reference to FIGS. 14 to 20.

The processor 102 may control the transceiver 106 to measure interference in a connection between the UE and a BS and report, to the BS, interference information including an interference strength of the measured interference. Based on the interference being associated with a mobile IAB node, the interference information may further include location information of the mobile IAB node.

Alternatively, a processing device including the processor 102 that controls a first UE triggering measurement reporting, and the memory 104 may be configured. In this case, the processing device may include at least one processor; and at least one memory connected to the at least one processor and storing instructions that, when executed by the at least one processor, cause the UE to measure interference in a connection between the UE and a BS and report, to the BS, interference information including an interference strength of the measured interference. Based on the interference being associated with a mobile IAB node, the interference information may further include location information of the mobile IAB node.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or BS 200 may include the processor 202 connected to the transceiver or RF transceiver 206, and the memory 204. The memory 204 may include at least one program for performing operations related to the embodiments described with reference to FIGS. 14 to 20.

The processor 202 may control the transceiver 206 to receive, from a UE, interference information including an interference strength of interference measured in a connection between the UE and the BS, and based on the interference information further including location information of a mobile IAB node, transmit, to the mobile IAB node or a donor node of the mobile IAB node, a message requesting a location change of the mobile IAB node.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

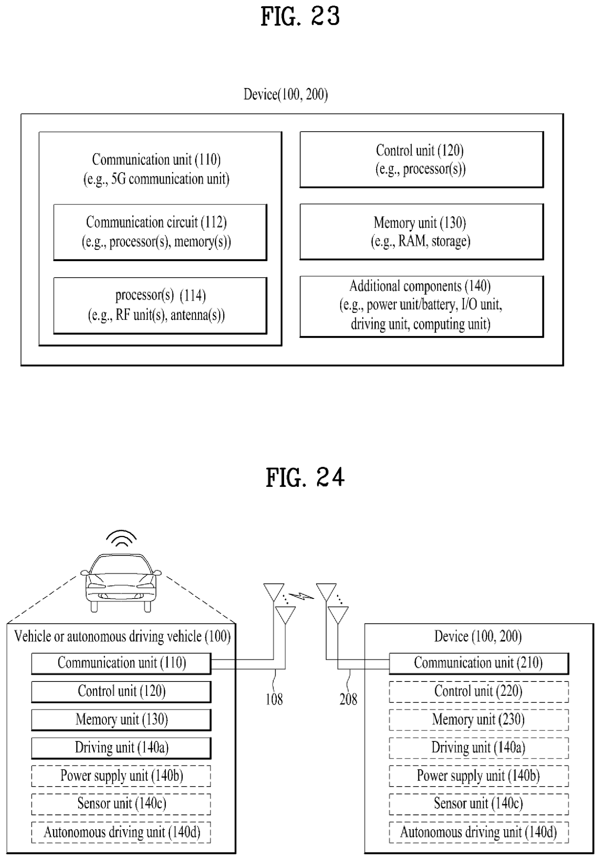

FIG. 23 illustrates another example of a wireless device applied to the present disclosure. The wireless device may be implemented in various forms according to a use-case/service (refer to FIG. 24).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are combinations of the components and features of the present disclosure in a predetermined form. Unless explicitly stated otherwise, each component or feature should be considered optional. Each component or feature may be implemented in a form not combined with other components or features. It is also possible to combine some components and/or features to constitute an embodiment of the present disclosure. The order of operations described in the embodiments of the present disclosure may be changed. Some configurations or features of one embodiment may be included in another embodiment, or may be replaced with corresponding configurations or features of another embodiment. It is apparent that claims not explicitly in a cited relationship in the claims may be combined to constitute an embodiment, or may be included as new claims through amendments after filing.

In this document, the embodiments of the present disclosure have been mainly described focusing on the signal transmission and reception relationship between the UE and the BS. The transmission and reception relationship may be identically or similarly extended to the signal transmission and reception between the UE and the relay, or between the BS and the relay. Specific operations described herein as being performed by the BS may, in some cases, be performed by the upper node. That is, in a network composed of a plurality of network nodes including the BS, various operations performed for communication with the UE may be performed by the BS or by other network nodes different from the BS. The term "base station" may be replaced with terms such as fixed station, Node B, eNode B (eNB), or access point. Similarly, the term "terminal" may be replaced with terms such as user equipment (UE), mobile station (MS), or mobile subscriber station (MSS).

The embodiments of the present disclosure may be implemented by various means, for example, hardware, firmware, software, or a combination thereof. In the case of implementation by hardware, the embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, or microprocessors.

In the case of implementation by firmware or software, the embodiments of the present disclosure may be implemented in the form of modules, procedures, functions, or the like for performing the functions or operations described above. The software code may be stored in a memory unit and driven by a processor. The memory unit may be located inside or outside the processor, and may exchange data with the processor by various means already known.

It will be apparent to those skilled in the art that the present disclosure may be embodied in other specific forms without departing from the features of the present disclosure. Therefore, the above detailed description should not be construed as restrictive in all aspects but should be considered illustrative. The scope of the present disclosure should be determined by a reasonable interpretation of the appended claims, and all modifications within the equivalent scope of the present disclosure are included in the scope of the present disclosure.

### INDUSTRIAL APPLICABILITY

The above-described implementations of the present disclosure are applicable to various mobile communication systems.

## Claims

1. A method performed by a user equipment (UE), comprising:
measuring interference in a connection between the UE and a base station (BS); and
reporting, to the BS, interference information including an interference strength of the measured interference,
wherein, based on the interference being associated with a mobile integrated access and backhaul (IAB) node, the interference information further includes location information of the mobile IAB node.

2. The method of claim 1, wherein the interference information further includes information about a signal strength variation of the mobile IAB node.

3. The method of claim 1, wherein the location information of the mobile IAB node includes information about a location and an altitude of the mobile IAB node predicted by the UE.

4. The method of claim 1, wherein the interference information further includes mobility information of the UE.

5. The method of claim 1, wherein the interference information further includes information about at least one of a cell identifier (ID), a public land mobile network (PLMN), or a donor IAB node associated with the mobile IAB node.

6. The method of claim 1, wherein, based on the UE being connected to the mobile IAB node, the UE transmits, to the mobile IAB node, a message related to adjusting a location of the mobile IAB node.

7. The method of claim 1, wherein the mobile IAB node is an IAB node moving via an unmanned aerial vehicle (UAV).

8. A computer-readable recording medium storing a program for performing the method of claim 1.

9. A user equipment (UE) comprising:
a radio frequency (RF) transceiver; and
a processor connected to the RF transceiver,
wherein the processor controls the RF transceiver to measure interference in a connection between the UE and a base station (BS) and report, to the BS, interference information including an interference strength of the measured interference, and
wherein, based on the interference being associated with a mobile integrated access and backhaul (IAB) node, the interference information further includes location information of the mobile IAB node.

10. The UE of claim 9, wherein the interference information further includes information about a signal strength variation of the mobile IAB node.

11. The UE of claim 9, wherein the location information of the mobile IAB node includes information about a location and an altitude of the mobile IAB node predicted by the UE.

12. A processing device for controlling a user equipment (UE), comprising:
at least one processor; and
at least one memory connected to the at least one processor and storing instructions that, when executed by the at least one processor, cause the UE to:
measure interference in a connection between the UE and a base station (BS); and
report, to the BS, interference information including an interference strength of the measured interference,
wherein, based on the interference being associated with a mobile integrated access and backhaul (IAB) node, the interference information further includes location information of the mobile IAB node.

13. A method performed by a base station (BS), comprising:
receiving, from a user equipment (UE), interference information including an interference strength of interference measured in a connection between the UE and the BS; and
based on the interference information further including location information of a mobile integrated access and backhaul (IAB) node, transmitting, to the mobile IAB node or a donor node of the mobile IAB node, a message requesting a location change of the mobile IAB node.

14. The method of claim 13, wherein the message further includes information about a movement direction associated with the location change of the mobile IAB node.

15. A base station (BS) comprising:
a radio frequency (RF) transceiver; and
a processor connected to the RF transceiver,
wherein the processor controls the RF transceiver to receive, from a user equipment (UE), interference information including an interference strength of interference measured in a connection between the UE and the BS, and based on the interference information further including location information of a mobile integrated access and backhaul (IAB) node, transmit, to the mobile IAB node or a donor node of the mobile IAB node, a message requesting a location change of the mobile IAB node.
